# EUROPEAN PATENT APPLICATION

(11) **EP 0 825 704 A2**
(43) Date of publication of application: **25.02.1998**
(21) Application number: 97113578.5
(22) Date of filing: 06.08.1997
(51) Int. Cl.: H02K 3/44

(54) **Highly heat-resistant electric motor**

(30) Priority: 21.08.1996 JP 238502/96
(71) Applicant: EBARA CORPORATION, Ohta-ku, Tokyo (JP)
(72) Inventor: Ohtake, Koichi, Yokohama-shi, Kanagawa-ken (JP); Hiramatsu, Tetsuya, Machida-shi, Tokyo (JP); Yamauchi, Shinnosuke, Fujisawa-shi, Kanagawa-ken (JP); Kato, Hiroyuki, Yokohama-shi, Kanagawa-ken (JP); Honda, Shuichiro, Kawasaki-shi, Kanagawa-ken (JP)
(74) Representative: Wagner, Karl H., Dipl.-Ing.

(57) **Abstract**

A heat-resistant electric motor has a rotor having a rotor core, and a stator fixedly disposed around the rotor with a radial gap defined therebetween and having a stator core. The stator includes windings which comprise turns of an electric wire comprising a copper wire and a layer of stainless steel covering the copper wire.

The layer of stainless steel which covers the copper wire is effective to prevent the copper wire from being oxidized even when the electric motor is used in high-temperature oxidizing environments whose temperatures exceed 400°C or even 450°C.

## Description

### BACKGROUND OF THE INVENTION

### Field of the Invention:

The present invention relates to a highly heat-resistant electric motor, and more particularly to an electric motor which is assembled as a canned motor in a casing together with a pump that can be operated by the canned motor, the electric motor being rotatable in a high-temperature, high-pressure atmosphere, e.g., at a temperature of 400°C or higher under a pressure of 200 kgf/cm² or higher.

### Description of the Prior Art:

To meet a demand in the art for the circulation of a high-temperature, high-pressure liquid such as a molten salt through a pipe, there has been manufactured a canned motor pump for handling such a high-temperature, high-pressure liquid.

The canned motor pump includes an electric motor having motor windings which comprise electric wires made of copper containing silver or copper plated with nickel, and covered with an insulation which comprises an inorganic material as a base material. When used in severe environments whose temperatures exceed 400°C, however, not only the insulation but also the electric wires are necessarily subject to performance degradations due to high-temperature oxidation. For this reason, almost no practical canned electric motors that can be used in high-temperature environments whose temperatures exceed 400°C have been available in the market.

### SUMMARY OF THE INVENTION

It is therefore an object of the present invention to provide a canned electric motor which is capable of operating stably for desired performance in high-temperature environments whose temperatures exceed 400°C.

To accomplish the above object, there is provided in accordance with the present invention an electric motor comprising a rotor having a rotor core, and a stator fixedly disposed around the rotor with a radial gap defined therebetween and having a stator core, the stator including windings which comprise turns of an electric wire comprising a copper wire and a layer of stainless steel covering the copper wire.

The electric wire further comprises an inorganic insulating layer disposed around the layer of stainless steel, and a layer of heat-resistant glass fibers wound around the inorganic insulating layer.

The stator further includes slots defined therein each housing the turns of the electric wire and insulating sheet wrapping the turns of the electric wire, the insulating sheet comprising a mica layer and a pair of layers of heat-resistant glass fibers sandwiching the mica layer therebetween. The stator further includes an inorganic insulating filler of ceramic filled in spaces between the turns of the electric wire in each of the slots.

The layer of stainless steel which covers the copper wire is effective to prevent the copper wire from being oxidized even when the electric motor is used in high-temperature oxidizing environments whose temperatures exceed 400°C or even 450°C. The insulating sheet which wraps the turns of the electric wire prevent an insulation on the electric wire from being degraded at such high temperatures. Consequently, the electric motor can operate highly stably at high temperatures.

The above and other objects, features, and advantages of the present invention will become apparent from the following description when taken in conjunction with the accompanying drawings which illustrate a preferred embodiment of the present invention by way of example.

### BRIEF DESCRIPTION OF THE DRAWINGS

FIG. 1 is a fragmentary longitudinal cross-sectional view of a canned electric motor according to the present invention;
FIG. 2 is an enlarged transverse cross-sectional view of an electric wire used in the canned electric motor shown in FIG. 1;
FIG. 3 is an enlarged cross-sectional view of an insulating sheet combined with the electric wire shown in FIG. 1; and
FIG. 4 is an enlarged cross-sectional view taken along line IV - IV of FIG. 1, showing turns of the electric wire wrapped by an insulating sheet and placed in a slot in a stator iron core.

### DETAILED DESCRIPTION OF THE PREFERRED EMBODIMENT

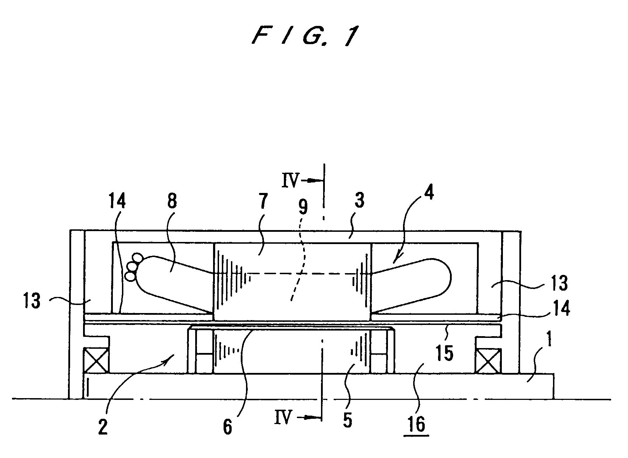

As shown in FIG. 1, a canned electric motor according to the present invention primarily comprises a rotor 2 mounted on a rotatable shaft 1 and a stator 4 fixedly disposed around the rotor 2 with a radial gap defined between the rotor 2 and the stator 4. A pump impeller (not shown) is mounted on an axial extension of the shaft 1, which is rotatably supported floatingly by magnetic bearings.

The rotor 2 comprises a rotor core 5 mounted on the shaft 1 and having an outer circumferential surface covered with a rotor can 6. The stator 4 comprises a stator core 7 and windings 9 extending through the stator core 7 and having coil ends 8 projecting from axially opposite sides of the stator core 7. The stator 4 is fixedly mounted in a casing 3 and has an inner circumferential surface covered with a stator can 15 which is fixed at its axially opposite ends to end plates 13 of the casing 3. The stator can 15 is spaced radially outwardly from the rotor can 6 by a small gap.

When the windings 9 of the stator 4 are energized, they generate revolving magnetic fields for rotating the rotor 2 with the shaft 1.

Cylindrical coil end stiffener tubes 14 are axially disposed between the end faces of the stator core 7 and the end plates 13 of the casing 3. The coil end stiffener tubes 14 have an inside diameter which is the same as the inside diameter of the stator core 7. The stator can 15 covers the coil end stiffener tubes 14 and the inner circumferential surface of the stator core 7. The stator can 15 serves to prevent a fluid handled by the pump from entering the stator 4.

The rotor core 5 has a slot bar embedded therein and having axially opposite ends joined to respective end rings mounted on axially opposite ends of the rotor core 5. Two disk-shaped balance rings are disposed respectively on the outer surfaces of the end rings. The rotor core 5 has an outer circumferential surface covered with the rotor can 6, which has axially opposite ends covering the respectively outer circumferential surfaces of the balance rings. The rotor can 6 also serves to prevent the fluid from entering the rotor 2.

When an alternating current is supplied to the windings 9 of the stator 4, the rotor 2 and the shaft 1 rotate in unison with each other, and the pump impeller connected to the shaft 1 rotates to pump the fluid. At the same time, part of the fluid is introduced into the gap between the rotor 2 and the stator 4 which are covered with the respective rotor and stator cans 6, 15, for thereby cooling the rotor 2 and the stator 4.

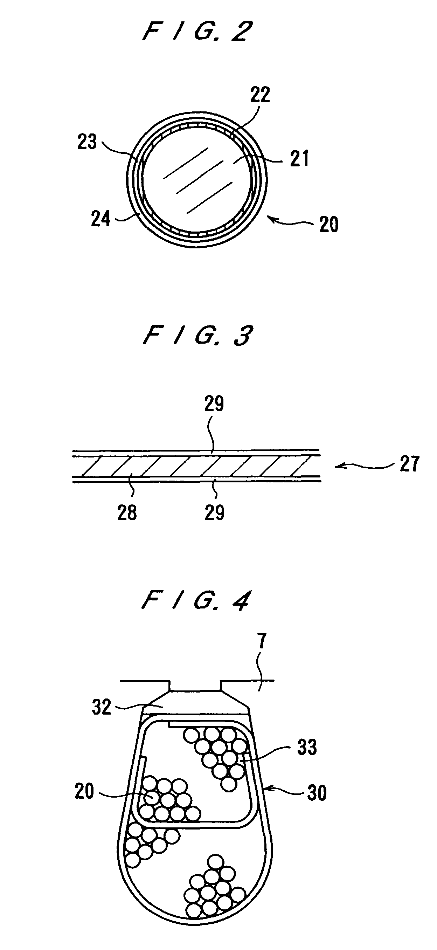

According to the present invention, as shown in FIG. 2, each of the windings 9 comprises an electric wire 20 in the form of a copper wire 21 covered with a thin layer 22 of stainless steel. The thin layer 22 of stainless steel is held closely against the copper wire 21, because they are produced by wire drawing to have a combined structure when the electric wire 20 is manufactured. The electric wire 20 also includes an insulating layer 23 applied as an inorganic insulating coating on the outer circumferential surface of the thin layer 22 of stainless steel, and a layer 24 of heat-resistant glass fibers wound around the insulating layer 23.

The copper wire 21 itself is quickly oxidized and loses its electric conductivity when subjected to high-temperature oxidizing environments whose temperatures exceed 400°C. Since, however, the copper wire 21 is covered with the thin layer 22 of stainless steel, the copper wire 21 is prevented from being oxidized at high temperatures of at least 400°C or even at high temperatures of at least 450°C. Consequently, the windings 9 can stably be used at high temperatures of more than 450°C.

The insulating layer 23 and the layer 24 of heat-resistant glass fibers wound therearound are effective in keeping the turns of the electric wire 20 stably insulated from each other even when used at high temperatures of more than 450°C.

FIG. 3 shows in enlarged cross section an insulating sheet 27 which is used to wrap the electric wire 20 when the electric wire 20 is placed in a slot defined in the stator core 7.

The insulating sheet 27 comprises a mica layer 28 which is highly insulative at high temperatures and a pair of layers 29 of heat-resistant glass fibers sandwiching the mica layer 28 therebetween. The turns of the electric wire 20 wrapped by the insulating sheet 27 is stably electrically insulated from the stator core 7 even when used at high temperatures of more than 450°C.

FIG. 4 shows in enlarged cross section a slot 30 defined in the stator core 7 and filled with the electric wire 20 wrapped by the insulating sheet 27. As shown in FIG. 4, turns of the electric wire 20 are wrapped by the insulating sheet 27 and placed in the slot 30. The turns of the electric wire 30 and the insulating sheet 27 retained in the slot 30 by a wedge plate 32 that is inserted into an inlet opening of the slot 30. The electric wire 20 is harder and tends to spring back with greater forces than ordinary copper wires because of the thin layer 22 of stainless steel. Therefore, the wedge plate 32 is made of ceramic in order to hold the electric wire 20 in place and also in order to provide a sufficient level of mechanical strength at high temperatures.

To prevent the covering layers of the electric wire 20 from being structurally damaged for reduced electric insulation capability when the turns of the electric wire 20 are inserted into the slot 30, spaces between the turns of the electric wire 20 are filled with an inorganic insulating coating solution 33 of ceramic after the turns of the electric wire 20 have been inserted. The introduced inorganic insulating coating solution 33 will thereafter be hardened. The inorganic insulating coating solution 33 is effective in further increasing the electric insulation of the electric wire 20.

In the illustrated embodiment, the canned electric motor has been described as incorporating the features of the present invention. However, the principles of the present invention are also applicable to various other electric motors which operate at high temperatures.

Although a certain preferred embodiment of the present invention has been shown and described in detail, it should be understood that various changes and modifications may be made therein without departing from the scope of the appended claims.

According to its broadest aspect the invention relates to an electric motor comprising:
a rotor; and
a stator;
said stator including windings which comprise turns of a wire.

## Claims

1. An electric motor comprising:
a rotor having a rotor core; and
a stator fixedly disposed around said rotor with a radial gap defined therebetween and having a stator core;
said stator including windings which comprise turns of an electric wire comprising a copper wire and a layer of stainless steel covering said copper wire.

2. An electric motor according to claim 1, wherein said electric wire further comprises an inorganic insulating layer disposed around said layer of stainless steel, and a layer of heat-resistant glass fibers wound around said inorganic insulating layer.

3. An electric motor according to claim 1, wherein said stator further includes slots defined therein each housing the turns of the electric wire and insulating sheet wrapping the turns of the electric wire, said insulating sheet comprising a mica layer and a pair of layers of heat-resistant glass fibers sandwiching said mica layer therebetween.

4. An electric motor according to claim 3, wherein said stator further includes an inorganic insulating filler of ceramic filled in spaces between the turns of the electric wire in each of said slots.

5. An electric motor comprising:
a rotor having a rotor core and a rotor can covering an outer circumferential surface of said rotor core; and
a stator fixedly disposed around said rotor with a radial gap defined therebetween and having a stator core and a stator can covering an inner circumferential surface of said stator core;
said stator including windings which comprise turns of an electric wire comprising a copper wire and a layer of stainless steel covering said copper wire.

6. An electric motor comprising:
a rotor; and
a stator;
said stator including windings which comprise turns of a wire.
